# EUROPEAN PATENT SPECIFICATION

(11) **EP 4 016 774 B1**
(45) Date of publication and mention of the grant of the patent: **10.05.2023**
(21) Application number: 21212327.7
(22) Date of filing: 03.12.2021
(51) Int. Cl.: H02G 3/38, H02G 3/04, E04B 9/00, H02J 50/00

(54) **ELECTRIC POWER SUPPLY MODULE FOR CEILINGS, WALLS MADE OF PLASTERBOARD AND THE LIKE**
STROMVERSORGUNGSMODUL FÜR DECKEN, WÄNDE AUS GIPSKARTON UND DERGLEICHEN
MODULE D'ALIMENTATION ÉLECTRIQUE POUR PLAFONDS, MURS EN PLACOPLÂTRE ET SIMILAIRES

(30) Priority: 17.12.2020 IT 202000006956 U
(43) Date of publication of application: 22.06.2022
(73) Proprietor: Novalux S.r.l., 40050 Argelato, Frazione Funo BO (IT)
(72) Inventor: SGRIGNOLI, Alessandro, 40138 Bologna (IT)
(74) Representative: Modiano, Micaela Nadia

(56) References cited:
- IT-A1- VI20 110 268
- JP-A- S58 150 641
- JP-B1- S5 136 532
- US-A1- 2015 225 066
- US-A1- 2015 225 067
- US-A1- 2018 251 977

## Description

The present invention relates to an electric power supply module for ceilings, walls made of plasterboard and the like which allows simple installation of electrical appliances on said module without the need to provide respective wiring.

It is known to resort to tracks constituted by a profiled element (generally made of extruded aluminum) which contains respective supports made of dielectric (i.e., insulating and not electrically conducting) material, which support inside them respective wires made of electrically conducting material (usually copper) for the entire length of the profiled element.

The longitudinal conducting wires are generally partially exposed, offering the possibility of electrical contact simply by abutting against their surface to specific appliances which can require electromotive force and/or digital signals.

It is known that tracks of the known type can be applied, by means of brackets and/or screws, on any ceiling or wall by external mounting or can be recessed in an adapted slots provided in the plasterboard (or in general in the ceiling or wall).

Existing flush-mount tracks in fact require the supporting structure of the false ceiling (or of the installation wall/ceiling) to be preset or designed to accommodate the profiled elements. Additional prior art is disclosed in IT VI20 110 268 A1, US 2018/251977 A1, JP S51 36532 B1.

The aim of the present invention is to solve the problems described above, proposing an electric power supply module for ceilings, walls made of plasterboard and the like that is easy to install.

Within this aim, an object of the invention is to provide an electric power supply module for ceilings, walls made of plasterboard and the like that does not require specific provisions in the wall and/or in the ceiling in which it is to be installed.

Another object of the invention is to provide an electric power supply module for ceilings, walls made of plasterboard and the like which can be coupled to the installation ceiling and/or wall without the need for brackets and supports.

Another object of the invention is to provide an electric power supply module for ceilings, walls made of plasterboard and the like that has a minimal visual impact once installed.

Another object of the invention is to provide an electric power supply module for ceilings, walls made of plasterboard and the like with a thickness that is similar to that of a traditional plasterboard panel.

A further object of the present invention is to provide an electric power supply module for ceilings, walls made of plasterboard and the like that has low costs, is relatively simple to provide in practice and is of assured application.

This aim and these and other objects that will become more apparent hereinafter are achieved by an electric power supply module for ceilings, walls made of plasterboard and the like as claimed in the appended claim 1.

Further characteristics and advantages of the invention will become better apparent from the description of a preferred but not exclusive embodiment of the electric power supply module for ceilings, walls made of plasterboard and the like, illustrated by way of non-limiting example in the accompanying drawings, wherein:

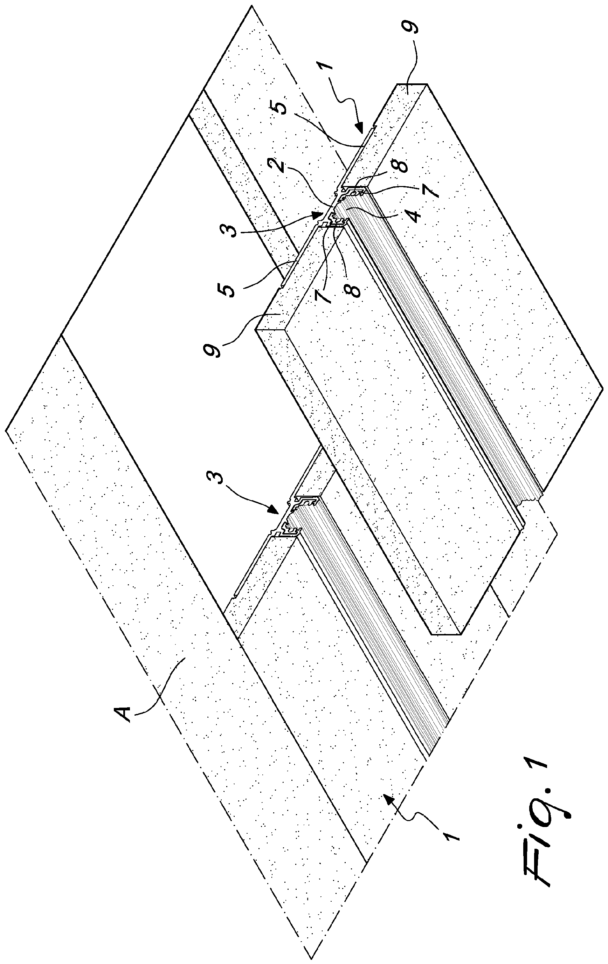

Figure 1 is a schematic perspective view of a possible embodiment of an electric power supply module for ceilings, walls made of plasterboard and the like according to the invention in a step of installation;

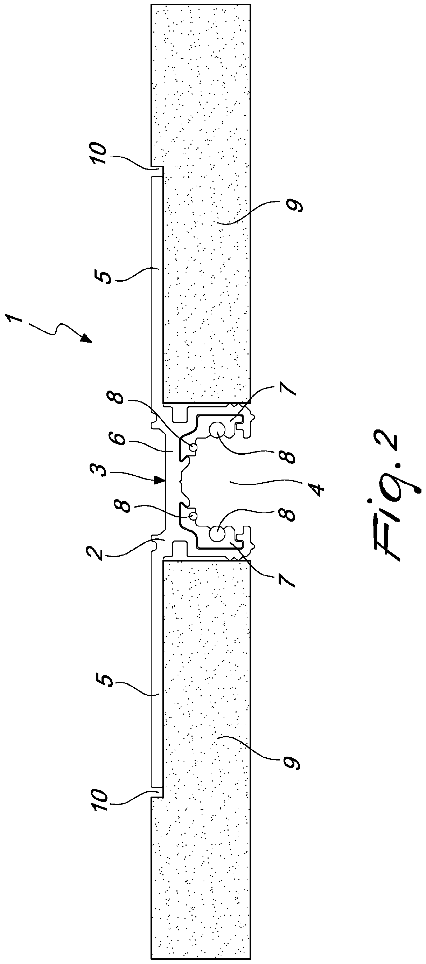

Figure 2 is a schematic front view of the module of Figure 1;

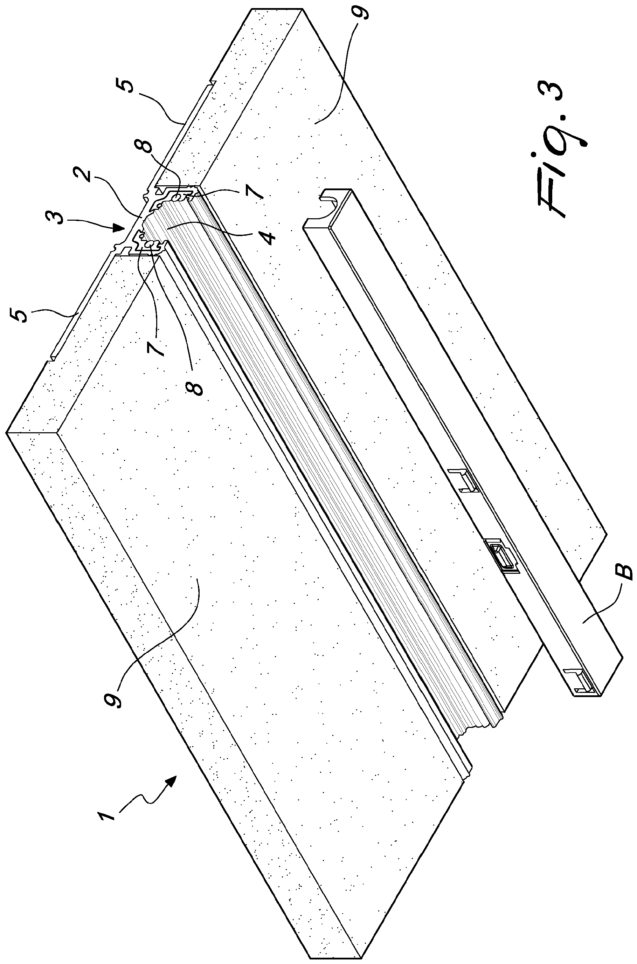

Figure 3 is a schematic perspective view of the module of Figure 1 with a potential user appliance facing it;

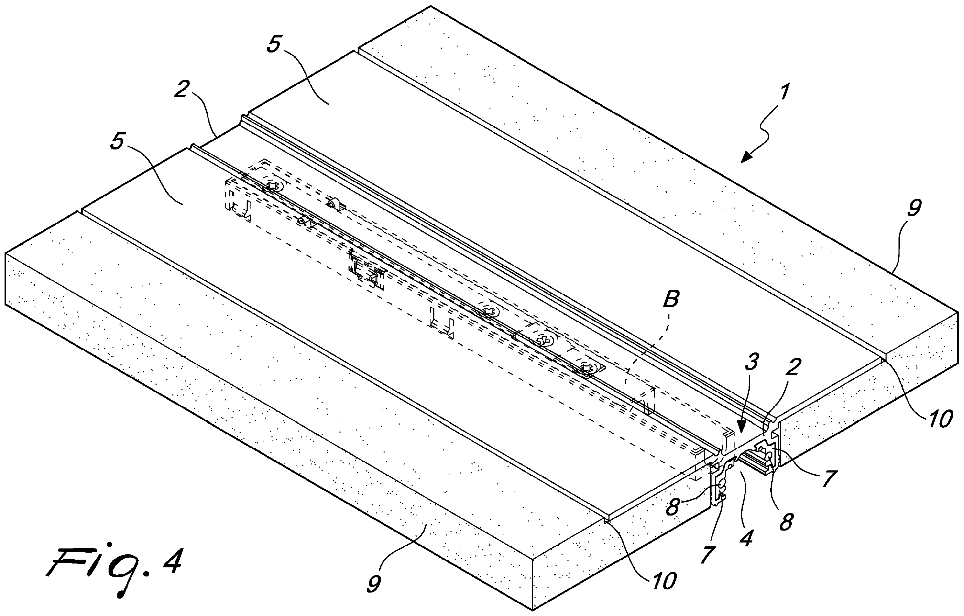

Figure 4 is a schematic perspective top view of the module of Figure 1 with a potential user appliance installed.

With particular reference to the figures, the reference numeral 1 generally designates an electric power supply module for ceilings A, walls made of plasterboard and the like.

The module 1 advantageously comprises at least one profiled element 2 which has at least one main body 3 which forms a substantially U-shaped compartment 4 and two lateral laminas 5 which lie on planes which are substantially parallel and proximate to the plane that contains the base 6 of the main body 3.

The module 1 according to the invention further comprises at least one support made of dielectric material 7, which does not conduct electricity, coupled within the compartment 4 of the at least one main body 3 of the at least one profiled element 2 along its entire length.

The profiled element 2 can be symmetrical or asymmetrical and therefore the main body 3 can be in a central or off-center position according to the specific manner of embodiment.

The module 1 according to the invention further comprises at least one wire 8 made of a material chosen from electrically conducting, optically conducting and the like, which is coupled rigidly to the support 7 made of dielectric material, along its entire length.

Finally, the module 1 comprises at least two panels 9 made of a material of a type chosen preferably from plasterboard panels, wood panels, wood derivative panels, panels made of mineral fibers, panels made of composite material, panels made of polymeric fiber, panels made of paper derivatives, metallic meshes and a combination thereof.

Each panel 9 in turn comprises at least one respective recess 10 whose shape and dimensions are substantially complementary to those of one of the lateral laminas 5 of the profiled element 2 for the accommodation thereof so that the lamina 5 does not protrude from the surface of the panel 9.

With particular reference to an embodiment of unquestionable interest in practice and in application, it is possible to advantageously interpose between the panels 9 and the profiled element 2 an adhesive material for the rigid coupling of each panel 9 to a respective side of the profiled element 2.

In particular, each lamina 5 is accommodated within the respective recess 10 (and adhesively bonded thereat) and the lateral surface of the main body 3 rests on a perimeter edge which is contiguous to the recess 10 of the respective panel 9 (and is adhesively bonded thereto).

The expression "adhesive material" is to be understood as including, in the present description, all adhesive and/or cohesive substances, including therefore all glues, silicone derivatives, resins, so-called hot glue, premixes for building use (based on plaster, cement and other materials), double adhesive sheets and the like.

It is not excluded, in any case, in alternative embodiments which are fully within the protective scope of the present invention, to adopt other methods for fixing the profiled element 2 to the panels 9 which provide for screws, rivets, screw anchors, seams and combinations of some of the described methods (including also adhesive bonding).

It is further specified that with reference to the embodiment shown by way of non-limiting example in the accompanying figures, the supports made of dielectric material 7, which are not electrically conducting, coupled inside the compartment 4 of the at least one main body 3 of the at least one profiled element 2 may conveniently be two, arranged symmetrically, each preset to support at least one respective wire 8 made of electrically conducting material.

In this manner, if the wires 8 are preset to supply AC electric power to specific appliances B which will be installed on the profiled element 2, the wire 8 on the right might be the one that corresponds to the conductor known as "phase" and the left one might be the one that corresponds to the conductor known as "neutral". In this case, the presence of an additional wire 8, preset for connection of the user appliance B to the ground system, is not excluded.

If instead the wires 8 are preset to supply DC electric power to specific appliances B which will be installed on the profiled element 2, the wire on the right 8 and the left one would constitute the outgoing portion and the return portion of a circuit in which the appliances B are connected in parallel.

It is further specified that the wires 8 made of a material chosen from electrically conducting, optically conducting and the like, coupled to each support made of dielectric material, might conveniently be two (as shown by way of non-limiting example in the accompanying figures), arranged at different heights with respect to the thickness of the main body 3.

In this case the wires 8 might also be of a different type: some wires might be preset to supply electromotive force and other wires might lead to a data line transceiver.

The accommodation of an even greater number of wires 8 than the examples shown in the accompanying figures is not excluded.

It is specified that each module 1 comprises, at its ends, respective electrical/optical connection terminals for the electrical/optical connection of the at least one wire 8, made of a material chosen from electrically conducting, optically conducting and the like, of a first module 1 to the at least one corresponding wire 8 of a second module 1.

In this manner, during the installation of the modules 1, their wiring is particularly facilitated since the simple juxtaposition of the respective ends will ensure the effective connection of the wires 8 that are present in one module 1 to those of the contiguous module 1, providing the connection of the wires 8 by means of the specific electrical/optical connection terminals.

It is specified furthermore that the profiled element 2 can have positively any shape chosen preferably from linear, curved, angular, T-shaped, cross-shaped, Y-shaped, and the like.

In this manner it is possible to create, on the installation ceiling A or wall, paths for the quick connection of appliances B (defined by the arrangement of the guide formed by the compartments 4 of all the profiled elements 2 that are present on contiguous modules 1) of any shape, with a linear or curved orientation, which corresponds to that of a broken line and/or of a mixed line, as well as provided with bifurcations, joints and path crossings.

It is therefore possible to provide any type of wiring in a simple manner: this wiring provision allows to arrange the appliances B in a plurality of different configurations which can be reconfigured easily (if necessary).

It is further specified that the profiled element 2 can comprise conveniently respective stiffening ribs, which can constitute anchoring elements for an appliance B of a type chosen from electric power user devices and data processing, transmission, reception, acquisition devices, as well as any combination thereof.

In order to facilitate the electrical connection of the appliances B, the adoption of wires 8 which are not electrically insulated (not covered by respective insulating sheaths made of dielectric material) and/or of wires 8 which are only partially covered with an insulating sheath (so as to leave exposed a part of their surface against which respective sliding contact terminals of the appliances B can abut) is provided.

It is further specified that each wire 8 made of a material chosen from electrically conducting, optically conducting and the like may advantageously be connected, by means of at least one respective front of an end module 1 of a series of aligned and connected modules 1, to a source of a type chosen preferably from a wired electric circuit, the electric power supply grid, a battery of electric power storage units, a data network, a telephone network, a network device such as a router, a modem, and the like, a telecommunication apparatus such as a TV antenna system, and the like.

In this manner, thanks to the electrical and optical continuity ensured by the mutual coupling of the wires 8 of contiguous modules 1, in each point of the path formed by the compartment 4 of any module 1 that is present in the predefined path (along the ceiling A and/or the wall) it is easily possible to apply an appliance B, which will be powered correctly.

From a constructive standpoint, it is specified that the profiled element 2 is preferably made of metallic material, particularly extruded aluminum. This material is particularly indicated by virtue of its limited specific gravity and its excellent mechanical characteristics.

As an alternative, the profiled element 2 may be made of a material chosen from polymeric, composite and the like.

It is specified that some polymeric materials and many composite materials have mechanical characteristics that can be compared with (and are even greater than) those of aluminum, but have a specific gravity that is even lower than that of said metal.

Polymers and composite materials generally behave as dielectric materials: in this case, therefore, the at least one support 7 made of dielectric material can be embedded directly in the main body 3 of said profiled element 2.

Advantageously, the present invention solves the problems described earlier, providing an electric power supply module 1 for ceilings A, walls made of plasterboard and the like that is easy to install.

In fact, once the module 1 has been arranged on the installation surface (ceiling A, wall and the like) it is possible to proceed with finishing operations (arrangements of coupling meshes at the surfaces of discontinuity, filling, skimming and painting) in a manner exactly identical to what is normally provided for the provision of traditional surfaces made of plasterboard and other similar materials.

It is fundamental to point out that the substantial absence of operations of preventive operations for preparation makes the entire installation of paths constituted by a series of contiguous modules 1 according to the invention particularly simple and quick.

Conveniently, in fact, the module 1 according to the invention requires specific provisions in the wall and/or ceiling in which it is to be installed, since it is necessary to provide the connection of the wires 8 to a respective system (as illustrated previously) only at one of the ends of the path formed by the series of contiguous modules 1.

The module 1 according to the invention can be advantageously coupled to the installation ceiling A and/or wall without the need for brackets and supports.

Usefully, the module 1 according to the invention has a minimal visual impact once installed.

It is specified that once all the appliances B have been connected along the path formed by the series of contiguous modules 1 it is possible to install elements for closing the compartment 4 so as to minimize the visual impact of the entire path of modules 1.

Advantageously, the module 1 has a thickness which is similar to that of a traditional panel made of plasterboard: this allows its installation also in all cases in which plasterboard panels are installed as infilling directly in contact with surface (ceiling A and/or wall B).

According to this principle, one might even use the modules 1 to provide the entire electrical and data system of an environment, by providing, among the possible appliances B that can be coupled to the profiled element 2, also with electrical outlets, switches and the like. Such an embodiment is assuredly simpler if one uses appliances B of the controlled type, i.e., indicated for domotics applications, i.e., so that they can be controlled and configured easily, minimizing the number of direct connections by means of electrical wires.

This possibility is particularly interesting for the provision of shops, display windows and exhibition stands, in which the possibility of unlimited reconfigurations and simplicity of installation are fundamentally interesting characteristics.

Validly, the module 1 according to the invention is relatively simple to provide in practice and has low costs: these characteristics make the module 1 according to the invention an innovation of assured application.

The invention thus conceived is susceptible of numerous modifications and variations, all of which are within the scope of the appended claims; all the details may furthermore be replaced with other technically equivalent elements.

In the illustrated embodiments, individual characteristics, given in relation to specific examples, may actually be interchanged with other different characteristics that exist in other embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric power supply module for ceilings (A), walls made of plasterboard and the like, wherein it comprises
- at least one profiled element (2) provided with at least one main body (3) which forms a substantially U-shaped compartment (4) and two lateral laminas (5) which lie on a plane that is substantially parallel and proximate to the plane that contains the base (6) of said main body (3);
- at least one support (7) made of dielectric material, which is not electrically conducting and is coupled inside the compartment (4) of said at least one main body (3) of said at least one profiled element (2) along its entire length;
- at least one wire (8) made of material chosen from electrically conducting, optically conducting and the like, rigidly coupled to said support (7) made of dielectric material along its entire length;
- at least two panels (9) made of material of a type preferably chosen from plasterboard panels, wood panels, panels made of wood derivatives, panels made of mineral fibers, panels made of composite material, panels made of polymeric material, panels made of paper derivatives, metallic meshes and combinations thereof, each panel (9) comprising a respective recess (10) whose shape and dimensions are substantially complementary to those of one of said lateral laminas (5) of said profiled element (2) for its accommodation without protrusion of said lamina (5) from the surface of said panel (9).

2. The module according to claim 1, wherein an adhesive is interposed between said panels (9) and said profiled element (2) for the rigid coupling of each panel (9) to a respective side of said profiled element (2), with said lamina (5) accommodated within said recess (10) and the lateral surface of said main body (3) resting on a perimeter edge, contiguous to said recess (10), of the respective panel (9).

3. The module according to claim 1, wherein said electrically non-conducting supports (7) made of dielectric material, coupled inside the compartment (4) of said at least one main body (3) of said at least one profiled element (2), are two, arranged symmetrically, each preset to support at least one respective wire (8) made of electrically conducting material.

4. The module according to claim 3, wherein said wires (8) made of a material chosen from electrically conducting, optically conducting and the like, coupled to each support (7) made of dielectric material, are two, arranged at different heights with respect to the thickness of said main body (3).

5. The module according to claim 1, wherein it comprises, at the ends, respective electrical/optical connection terminals for the electrical/optical connection of the at least one wire (8), made of a material chosen from electrically conducting, optically conducting and the like, of a first module (1) to the at least one corresponding wire (8) of a second module (1).

6. The module according to claim 1 wherein said profiled element (2) has a shape preferably chosen from linear, curved, angular, T-shaped, cross-shaped, Y-shaped, and the like.

7. The module according to one or more of the preceding claims, wherein said profiled element (2) comprises respective stiffening ribs, which constitute anchoring elements for an appliance (B) of a type chosen from electric power user devices and data processing, transmission, reception, acquisition devices, and a combination thereof.

8. The module according to one or more of the preceding claims, wherein at least one wire (8) made of material chosen from electrically conducting, optically conducting and the like, is connected, by means of at least one respective front of an end module (1) of a series of aligned and contiguous modules (1), to a source of a type chosen preferably from a wired electric circuit, the electric power supply grid, a battery of electric power storage units, a data network, a telephone network, a network device such as a router, a modem and the like, a telecommunication system such as a TV antenna system, and the like.

9. The module according to one or more of the preceding claims, wherein said profiled element (2) is made of metallic material, particularly aluminum.

10. The module according to one or more of the preceding claims, wherein said profiled element (2) is made of a material chosen from polymeric, composite and the like, said at least one support (7) made of dielectric material being embedded directly in said main body (3).

## Patentansprüche

1. Ein Stromversorgungsmodul für Decken (A), Wände aus Gipskarton und dergleichen, das Folgendes umfasst:
- mindestens ein profiliertes Element (2), ausgestattet mit mindestens einem Hauptkörper (3), der einen im Wesentlichen U-förmigen Hohlraum (4) und zwei seitliche Leisten (5) bildet, die auf einer Ebene liegen, welche im Wesentlichen an die Ebene angrenzt und zu ihr parallel ist, die die Basis (6) des Hauptkörpers (3) enthält;
- mindestens einen Träger (7) aus dielektrischem Material, der nicht elektrisch leitend und in dem Hohlraum (4) des mindestens einen Hauptkörpers (3) des mindestens einen profilierten Elements (2) über seine gesamte Länge angeschlossen ist;
- mindestens einen Draht (8) aus einem Material, das gewählt ist aus elektrisch leitend, optisch leitend und dergleichen, starr gekoppelt mit dem Träger (7) aus dielektrischem Material über seine gesamte Länge;
- mindestens zwei Platten (9) aus einem Material von einer Art, die vorzugsweise gewählt ist aus Gipskartonplatten, Holzplatten, Platten aus Holzderivaten, Platten aus Mineralfasern, Platten aus Verbundmaterial, Platten aus Polymermaterial, Platten aus Papierderivaten, Metallgeflechten und Kombinationen davon, wobei jede Platte (9) eine entsprechende Vertiefung (10) umfasst, deren Form und Abmessungen im Wesentlichen komplementär sind zu denjenigen der seitlichen Leisten (5) des profilierten Elements (2) zum Zwecke seiner Aufnahme ohne Vorstehen der Leiste (5) von der Oberfläche der Platte (9).

2. Das Modul gemäß Anspruch 1, wobei ein Klebstoff zwischen den Platten (9) und dem profilierten Element (2) angebracht ist, zum Zwecke der starren Kopplung jeder Platte (9) mit einer entsprechenden Seite des profilierten Elements (2), wobei die Leiste (5), die in die Vertiefung (10) aufgenommen ist, und die Seitenfläche des Hauptkörpers (3) auf einer Umfangskante, angrenzend an die Vertiefung (10), der entsprechenden Platte (9) aufliegen.

3. Das Modul gemäß Anspruch 1, wobei die elektrisch nicht leitenden Träger (7) aus dielektrischem Material, die in dem Hohlraum (4) des mindestens einen Hauptkörpers (3) des mindestens einen profilierten Elements (2) angeschlossen sind, zwei an der Zahl sind, symmetrisch angeordnet, jeweils ausgebildet, um mindestens einen dazugehörigen Draht (8) aus elektrisch leitendem Material zu tragen.

4. Das Modul gemäß Anspruch 3, wobei die Drähte (8), hergestellt aus einem Material, das gewählt ist aus elektrisch leitend, optisch leitend und dergleichen, gekoppelt mit jedem Träger (7) aus dielektrischem Material, zwei an der Zahl sind, angeordnet auf verschiedenen Höhen bezogen auf die Dicke des Hauptkörpers (3) .

5. Das Modul gemäß Anspruch 1, das an den Enden entsprechende elektrische/optische Anschlussklemmen für den elektrischen/optischen Anschluss des mindestens einen Drahts (8), hergestellt aus einem Material, das gewählt ist aus elektrisch leitend, optisch leitend und dergleichen, eines ersten Moduls (1) an den mindestens einen entsprechenden Draht (8) eines zweiten Moduls (1) umfasst.

6. Das Modul gemäß Anspruch 1, wobei das profilierte Element (2) eine Form hat, die vorzugsweise gewählt ist aus linear, gekrümmt, winklig, T-förmig, kreuzförmig, Y-förmig und dergleichen.

7. Das Modul gemäß einem oder mehreren der obigen Ansprüche, wobei das profilierte Element (2) entsprechende Versteifungsrippen umfasst, die Verankerungselemente für eine Vorrichtung (B) von der Art bilden, die gewählt ist aus Strom-Anwendergeräten und Datenverarbeitungs-, -übertragungs-, - empfangs-, -erfassungsgeräten und einer Kombination davon.

8. Das Modul gemäß einem oder mehreren der obigen Ansprüche, worin mindestens ein Draht (8) aus einem Material besteht, das gewählt ist aus elektrisch leitend, optisch leitend und dergleichen; über mindestens eine entsprechende Vorderseite eines Endmoduls (1) einer Reihe ausgerichteter und benachbarter Module (1) mit einer Quelle von einem Typ verbunden ist, der vorzugsweise gewählt ist aus einer verdrahteten elektrischen Schaltung, dem Stromversorgungsnetz, einer Batterie von Stromspeichereinheiten, einem Datennetz, einem Telefonnetz, einem Netzwerkgerät wie z. B. einem Router, einem Modem und dergleichen, einem Telekommunikationssystem wie z. B. einem Fernsehantennensystem und dergleichen.

9. Das Modul gemäß einem oder mehreren der obigen Ansprüche, wobei das profilierte Element (2) aus Metallmaterial, insbesondere Aluminium, besteht.

10. Das Modul gemäß einem oder mehreren der obigen Ansprüche, wobei das profilierte Element (2) aus einem Material besteht, das gewählt ist aus Polymer, Verbundmaterial und dergleichen, wobei der mindestens eine Träger (7) aus dielektrischem Material besteht, das direkt in den Hauptkörper (3) eingebettet ist.

## Revendications

1. Module d'alimentation électrique pour des plafonds (A), des murs en plaque de plâtre et analogues, comportant :
- au moins un élément profilé (2) pourvu d'au moins un corps principal (3) qui forme un compartiment sensiblement en forme de U (4) et de deux lames latérales (5) qui se situent sur un plan qui est sensiblement parallèle et près du plan qui contient la base (6) dudit corps principal (3),
- au moins un support (7) en matériau diélectrique, qui n'est pas électriquement conducteur et est couplé à l'intérieur du compartiment (4) dudit au moins un corps principal (3) dudit au moins un élément profilé (2) sur toute sa longueur,
- au moins un fil (8) en un matériau choisi parmi électriquement conducteur, optiquement conducteur et analogue, rigidement couplé audit support (7) en matériau diélectrique sur toute sa longueur,
- au moins deux panneaux (9) en matériau d'un type de préférence choisi parmi des panneaux de plaque de plâtre, des panneaux de bois, des panneaux en dérivés de bois, des panneaux en fibres minérales, des panneaux en matériau composite, des panneaux en matière polymère, des panneaux en dérivés de papier, des treillis métalliques et des combinaisons de ceux-ci, chaque panneau (9) comportant un évidement (10) respectif dont la forme et les dimensions sont sensiblement complémentaires de celles de l'une desdites lames latérales (5) dudit élément profilé (2) pour sa réception sans saillie de ladite lame (5) à partir de la surface dudit panneau (9).

2. Module selon la revendication 1, dans lequel un adhésif est intercalé entre lesdits panneaux (9) et ledit élément profilé (2) pour le couplage rigide de chaque panneau (9) à un côté respectif dudit élément profilé (2), avec ladite lame (5) reçue à l'intérieur dudit évidement (10) et la surface latérale dudit corps principal (3) reposant sur un bord périmétrique, contigu audit évidement (10), du panneau (9) respectif.

3. Module selon la revendication 1, dans lequel lesdits supports électriquement non conducteurs (7) en matériau diélectrique, couplés à l'intérieur du compartiment (4) dudit au moins un corps principal (3) dudit au moins un élément profilé (2), sont au nombre de deux, agencés symétriquement, chacun étant prédéfini pour supporter au moins un fil (8) respectif en matériau électriquement conducteur.

4. Module selon la revendication 3, dans lequel lesdits fils (8) en un matériau choisi parmi électriquement conducteur, optiquement conducteur et analogue, couplés à chaque support (7) en matériau diélectrique, sont au nombre de deux, agencés à différentes hauteurs par rapport à l'épaisseur dudit corps principal (3).

5. Module selon la revendication 1, comportant, aux extrémités, des bornes de connexion électrique/optique respectives pour la connexion électrique/optique du au moins un fil (8), en un matériau choisi parmi électriquement conducteur, optiquement conducteur et analogue, d'un premier module (1) au au moins un fil (8) correspondant d'un second module (1).

6. Module selon la revendication 1, dans lequel ledit élément profilé (2) a une forme de préférence choisie parmi linéaire, incurvée, angulaire, en T, en croix, en Y et analogue.

7. Module selon une ou plusieurs des revendications précédentes, dans lequel ledit élément profilé (2) comporte des nervures de renfort respectives, qui constituent des éléments d'ancrage pour un appareil (B) d'un type choisi parmi des dispositifs utilisateurs d'énergie électrique et des dispositifs de traitement, de transmission, de réception et d'acquisition de données, et une combinaison de ceux-ci.

8. Module selon une ou plusieurs des revendications précédentes, dans lequel au moins un fil (8) en un matériau choisi parmi électriquement conducteur, optiquement conducteur et analogue, est connecté, au **moyen** d'au moins un avant respectif d'un module d'extrémité (1) d'une série de modules (1) alignés et contigus, à une source d'un type de préférence choisi parmi un circuit électrique câblé, le réseau d'alimentation électrique, une batterie d'unités de stockage d'énergie électrique, un réseau de données, un réseau téléphonique, un dispositif de réseau tel qu'un routeur, un modem et analogue, un système de télécommunications tel qu'un système d'antenne de télévision et analogue.

9. Module selon une ou plusieurs des revendications précédentes, dans lequel ledit élément profilé (2) est en matériau métallique, en particulier en aluminium.

10. Module selon une ou plusieurs des revendications précédentes, dans lequel ledit élément profilé (2) est en un matériau choisi parmi polymère, composite et analogue, ledit au moins un support (7) en matériau diélectrique étant directement incorporé dans ledit corps principal (3).
